# EUROPEAN PATENT APPLICATION

(11) **EP 1 661 920 A2**
(43) Date of publication of application: **31.05.2006**
(21) Application number: 05110642.5
(22) Date of filing: 11.11.2005
(51) Int. Cl.: C08F 8/50, C08L 23/16, C08J 3/20, C08K 5/54

(54) **Improved process for obtaining elastomeric masters containing inorganic fillers**

(30) Priority: 26.11.2004 IT MI20042289
(71) Applicant: Polimeri Europa S.p.A., 72100 Brindisi (IT)
(72) Inventor: Tanaglia, Tiziano, 40141, Bologna (IT)
(74) Representative: De Gregori, Antonella

(57) **Abstract**

The present invention relates to a process for the singlestep preparation of masters based on EP(D)M and reinforcing inorganic fillers, said process being characterized in that it is effected by mixing, under high shear conditions, a polymeric blend comprising:
a) one or more EP(D)M polymers, optionally mixed with poly-alpha-olefins, preferably with ethylene crystal copolymers;
b) one or more coupling agents, preferably selected from vinyl silanes;
c) one or more hydroperoxides;
d) reinforcing inorganic fillers;
   at a temperature ranging from 75°C to 260°C, preferably from 140°C to 210°C.

## Description

The present invention relates to a method for obtaining elastomeric masters based on ethylene propylene copolymers and/or terpolymers (hereinafter EP(D)M) and mineral fillers, by means of reactive extrusion, contemporaneously with the blending and dispersion of the same.

The method of the present invention allows EP(D)M masters with mineral fillers to be obtained, through a single extrusion process, which can be used in several fields, such as cable insulation and profiles for the building industry.

The masters (or blends) object of the present invention are characterized by an advantageous rheology with respect to hypothetical blends obtained by mixing the starting polymeric bases, according to suitable technologies.

Elastomeric copolymers and terpolymers of ethylene (EP(D)M are used in the field of blends for cable insulation or filling, profiles in the building industry, and other applications in which they are used, in any case, in a combination with mineral fillers.

In the above-mentioned applications, the masters based on EP(D)M are extruded to obtain the final manufactured products and are then vulcanised, usually with a peroxide.

For this reason, products characterized by high fluidity in shear and high shape stability of the extruded product would be useful for the productivity of the extrusion process. In other words, products having a high shear thinning (shear sensitivity) are preferred.

The products which can be obtained from Ziegler-Natta polymerization, in particular EP(D)M polymers, are typically linear, with a rheology which can only be modified by regulating the molecular weights or the molecular weight distribution.

Products having a large molecular weight distribution are used to improve the shear sensitivity of polymers (masters) so as to have a higher shape stability with an equal fluidity. A wide MWD however also means a high tackiness (due to a low M_{w}), a slower vulcanisation and poorer elastic properties of the final product.

A wide bibliography is available which lists advantages in using products having an optimal rheology due to the effect of the polymeric chain branching or the particular bimodal structures. In particular, it is well known to technical experts in the field that bimodal or branched products have advantages, with respect to linear products, as far as the extrusion rate is concerned, without suffering from the drawbacks typical of products with a wide molecular weight distribution. Problems may arise, however, according to the particular application, of high swelling and shrinkage during extrusion, specifically due to the higher elasticity of the moulded product: in other words, in relation to the final application - referring to the formulation - forming technique and characteristics of the end-product, the optimal branching degree can vary within a wide range.

Methods for obtaining these branched products directly during polymerisation have been indicated various times in patent literature; in particular, these documents (see, for example, US-A-4,156,767 and US-A-4,510,303) refer to terpolymers or tetrapolymers of ethylene in which polyenes are used in polymerization, having more than one double bond polymerizable via Ziegler-Natta. In this case, even if the branching improves properties such as the ratio between shape stability, viscosity during extrusion and processability of the polymer in general, it is difficult to control, mainly in heterogeneous processes and can easily produce material which is cross-linked or difficult to disperse. Furthermore, industrial polymerization processes are characterized by a poor flexibility and consequently it would not be possible to produce a complete range of products for single final applications/formulations/uses, without frequent production changes, which are particularly uneconomical. In EP(D)M products, branching can be obtained by cationic coupling due to the acidic species of the Ziegler-Natta catalyst, through secondary reactions which cannot be controlled, and therefore without constancy of the effect on the polymer.

EP-A-0801084 describes a multi-step polymerization process for the production of optionally bimodal EP(D)M blends (consequently without an undesired widening of the molecular weight distribution) and regulating at will the compositions of the polymeric bases in the mix, so as to avoid a low molecular weight - low propylene content coupling, which is typical of Ziegler-Natta polymerizations. The process of the above-mentioned patent application is also characterized in that it allows a perfect homogeneity in the mix of the polymeric bases, avoiding complexes and not always efficient out-of-line mixing steps. Although the process is, on the one hand, characterized by a practically absolute flexibility in designing behaviour polymers, on the other hand, it has proved to be difficult and onerous in its embodiment.

In Italian patent applications nr. MI98A 002774 (corresponding to US-6,211,332), MI2003A 000629 and MI2004A 000751, all in the name of the same Applicant, methods are described for reducing the molecular weight and regulating the rheology of ethylene-propylene copolymers and terpolymers, through extrusion processes in the presence of products of a hydroperoxide nature and, in the case of Italian patent application MI2004A 000751, also in the presence of a poly-functional vinyl monomer.

All the processes, object of the above-mentioned patent applications, include an additional and supplemental extrusion phase with respect to simple mixing.

A process has now been found which overcomes the above drawbacks.

In accordance with this, the present invention relates to a process for the single-step preparation of masters based on EP(D)M and inorganic fillers, the above process being characterized in that it is carried out by mixing, under high shear conditions, a polymeric blend comprising:
a) one or more EP(D)M polymers, optionally mixed with poly-alpha-olefins, preferably with ethylene crystal copolymers;
b) one or more coupling agents, preferably selected from vinyl silanes;
c) one or more hydroperoxides;
d) reinforcing inorganic fillers;
at a temperature ranging from 75°C to 260°C, preferably from 140°C to 210°C.

The process, object of the present invention, is therefore characterized in that it is intrinsically economical as it saves a unitary operation (post-modification and mixing of the components).

It has been surprisingly found, however, and documented in the experimental examples listed below, that, if from the point of view of rheological properties (measured with the Mooney relaxation method) the product of the invention is able to maintain the advantages mentioned in the cited documents, as far as the distribution and compatibilization of the mineral fillers are concerned, a clear improvement is obtained and can be simply observed through the tensile properties of the blend.

The master produced with the process of the present invention, with the addition of vulcanising agents (peroxides) and optionally plasticizers, can be used as an applicative blend, particularly in the insulation field.

The term EP(D)M means EPM (ethylene-propylene) copolymers and EPDM (ethylene - propylene - non-conjugated diene terpolymers), wherein the weight content of ethylene ranges from 85 to 40%, preferably from 76 to 45%. The possible non-conjugated diene is present in a maximum quantity of 12% by weight, preferably 5% by weight. The EP(D)M terpolymers normally have the following properties:
** Weight average molecular weight (M_{w}) from 70,000 to 500,000, preferably from 90,000 to 450,000;
** Polydispersity expressed as M_{w}/Mₙ lower than 5, preferably from 1.8 to 4.9;
** Ratio between Melt Index flow at a weight of 21.6 kg and Melt Index flow at a weight of 2.16 kg, both at a temperature of 230°C, ranging from 18 to 60, preferably from 20 to 40.

The molecular weight M_{w} is measured via GPC with a diffraction index detector.

In the case of EPDM, the diene is selected from:
-- linear-chain dienes, such as 1,4-hexadiene and 1,6-octadiene;
-- branched-chain acyclic dienes, such as 5-methyl-1,4-hexadiene; 3,7-dimethyl-1,6-octadiene; 3,7-dimethyl-1,7-octadiene;
-- single-ring alicyclic dienes, such as 1,4-cyclo hexadiene; 1,5-cyclo-octadiene; 1,5-cyclododecadiene;
-- dienes having condensated and bridge alicyclic rings, such as methyltetrahydroindene; dicyclopentadiene; bicyclo[2.2.1]hepta-2,5-diene; alkenyl, alkylidene, cyclo-alkenyl and cyclo-alkylidene norbornenes such as 5-methylene-2-norbornene; 5-ethylidene-2-norbornene (ENB); 5-propenyl-2-norbornene.

In the preferred embodiment, the diene is 5-ethylidene-2-norbornene (ENB).

"High shear" means shear values higher than 100 sec⁻¹, more preferably higher than 500 sec⁻¹.

The hydroperoxide substance which can be used in the process of the present invention is characterized in that it does not undergo significant decomposition at the process temperatures and times, said concept being expressed by the halving time, which must be higher than the total process time, preferably higher than 10 times the process time.

Examples of substances of a hydroperoxide nature which can be used according to the present invention are, terbutyl hydroperoxide, cumyl hydroperoxide, isoamyl hydroperoxide, t-butyl hydroperoxide being preferred.

The hydroperoxide is fed in a quantity ranging from 0.05 to 5 parts per 100 parts of polymer (weight/weight), preferably from 0.15 to 2.

The coupling agent suitable for the present invention preferably belongs to the family of vinyl silanes and among these vinyltrimethoxy silane and vinyltris(betamethoxyethoxy) silane are preferred. The quantity of coupling agent to be used according to the present invention ranges from 0.05 to 5 parts per 100 parts of polymer, preferably from 0.2 to 2 (weight/weight).

The reinforcing inorganic fillers which can be used according to the present invention are those commonly adopted in the field of elastomer-based blends. Typical examples are silica, clays, kaolin, calcium or magnesium carbonate, talc, magnesium or aluminum hydroxides. Kaolin and silica are preferred. Mixtures of reinforcing inorganic fillers can also be used however for the embodiment of the present invention.

The quantity of reinforcing mineral filler which can be used according to the present invention ranges from 15 to 350, preferably from 30 to 150 parts per 100 parts of polymer.

The process of the present invention can be effected using common transformation machines of polymeric materials which allow said shear values, for example an extruder in continuous or, preferably, a twin-screw extruder or an extruder of the ko-kneter type. These types of extruder are those which guarantee a sufficient mastication. The extrusion plant is generally composed of a feeding zone in which gravimetric or volumetric hoppers dose the various components and sent them to the extruder inlet.

The extruder, single-screw, twin-screw (co- or counter-rotating), ko-kneter, heats and sends the granules of the products fed towards a mixing area, the combined effect of the temperature, mixing and compression on the product leads to the plasticization of the various polymeric bases and, by continuing and/or intensifying the process, to the post-modification of the product.

The process of the present invention can be optionally carried out in the presence of a polyfunctional, preferably bifunctional or trifunctional, more preferably trifunctional, vinyl monomer. This preferably consists of acrylic, methacrylic or maleic esters or imides of alcohols or bi-or tri-functional amines. If present, the polyfunctional vinyl monomer is used in a quantity ranging from 0.5 to 1.5 parts per 100 parts of polymer.

According to the process of the present invention, it is optionally possible to correct the rheological and mechanical characteristics with the addition of other polymeric bases: it is in fact possible to add from 0 to 40 parts of polyolefin per 100 parts of total polymer, preferably from 5 to 25. The polyolefin is selected from crystalline copolymers of ethylene such as LDPE, LLDPE, VLDPE, ULDPE or EVA, so as to have melting points not higher than 125°C, preferably not higher than 115°C.

So-called plastomers, crystalline elastomeric copolymers known for example under the trade-names of engage, exact, tafmer, are also included in this category.

The molecular weight of the polyolefin is such as to have an MFI (E) ranging from 0.2 to 100, preferably from 3 to 25.

Alternatively or in addition to the polyolefin, it is possible to use other elastomers to correct the properties of the blends, in particular hydrogenated block copolymers can be used. In the preferred embodiment, the block copolymer, if used, is selected from SEBS block copolymers, i.e. styrene/ethylene-butene/styrene having a molecular weight of the hydrogenated block copolymer ranging from 45,000 to 250,000, preferably from 50,000 to 200,000.

The ratio between the EP(D)M polymer and block copolymer can range from 100:0 to 80:20, due to the cost of hydrogenated block copolymers, however, it is preferable to maintain a ratio ranging from 100:0 to 90:10.

With the polymeric part being equal to 100, the master can also contain, in addition to the reinforcing inorganic fillers, the following components:
** from 0 to 300 parts of a further quantity of filler, preferably non-reinforcing, such as, for example, economical calcium carbonate or carbon black with a low surface area, to be fed together with the vulcanization additives downstream of the extrusion;
** from 0 to 100 parts, preferably from 5 to 50, of a plasticizer selected from mineral oil or paraffinic wax, the above plasticizer being added directly in the extrusion phase or together with the vulcanization additives or, alternatively, divided between the two operations;
** from 0 to 2 parts of process coadjuvant additive, preferably selected from stearic acid and polyethylene glycol, which can be added directly in the extrusion phase or together with the vulcanization additives;
** from 0 to 5 parts of antioxidant, Anox HB (Great Lakes) being preferred, which can be added directly in the extrusion phase or together with the vulcanization additives or, alternatively, divided between the two operations;
** from 0 to 10 parts of zinc oxide and/or lead oxide, which is preferably added in the extrusion phase or, at least partially, together with the vulcanization additives;
** from 0 to 15 parts of coagent for the peroxide vulcanization, selected for example from liquid polybutadiene, triallyl cyanurate, N,N'-m-phenylenedimaleimide, the above coagent being added directly in the extrusion phase or together with the vulcanization additives or, alternatively, divided between the two operations;
** from 0.4 to 12 parts of peroxide selected from those normally used for the cross-linking of EP(D)M, preferably carried in EPM, dicumyl peroxide and di(terbutylperoxyisopropyl)benzene being preferred, the above peroxide being added in a phase subsequent to extrusion to avoid scorching of the blend.

In a further optional embodiment of the present invention, the process, object of the present invention, can be carried out within the finishing phase of the production process of the generating polymeric base. In this case, the whole or, preferably, a part of the polymer in finishing phase (preceding the final forming) is removed from the standard flow and sent to the transformation machine selected for the process, object of the invention.

The following examples are provided for a better understanding of the present invention.

### EXAMPLES

### Material:

- **Dutral**^{**R**} **C0038** ethylene-propylene copolymer - Polimeri Europa
   - 28% wt of propylene
   - ML (1+4) at 125°C = 58.
- **Dutral**^{**R**} **Ter4033** EPDM terpolymer - Polimeri Europa.
   - 25% wt of propylene
   - ML (1+4) at 100°C = 30.
- **Clearflex**_{**R**} **MQF0** VLDPE - Polimer Europa.
   - Density 0.895 g/cm³
   - Melting point 110°C (DSC)
   - MFI (E) = 13

### CHARACTERIZATION OF THE PRODUCTS

The Mooney relaxation method consists in effecting the relaxation test at the end of the Mooney viscosity measurement.

The ML relaxation area represents the area made up of the ML vs time curve obtained by continuing to measure the torque with the rotor at a standstill above the ML test limit.

It is therefore a parameter which represents a stored energy and is usually normalized by dividing it by the ML value.

The slope on the other hand is the inclination of the ML log line vs time and is perfectly correlated to the area/ML ratio.

The lower the absolute value of the slope i.e. the greater the area/ML ratio, the higher is the ratio between the stored energy and dissipated energy of the product (high elasticity).

In reality, for instrumental adjustments and repeatability problems, the ML relaxation procedure was rigidly followed: only the experimental values registered within the range of 1.6-5 sec. after the stoppage of the rotor are processed and from these the ML log line vs t is processed, from which the slope and area for integration from t=1 to t=100 sec. is obtained.

For greater details, see Kautschuk+gummi Kunststoffe 43 (1990), page 431 and J. Appl. Polym. Sci. 74 (1999), page 1220.

### Comparative Example 1a (ref. 12.)

The following polymeric base was fed to a twin-screw extruder of the Maris TM 35V type, L/D = 32, maximum temperature 205°C, RPM = 240:
- 85 phr C0038
- 15 phr Clearflex MQF0,
- 1 phr TBHP (at 70% in water),
- 0.25 phr TMPTMA

The product was recovered and subsequently homogenized in an open mixer at 100°C.

The Mooney viscosity and Mooney relaxation analysis was carried out on this product, at 100°C according to the regulation ASTM D1646-03
ML (1+4) at 100°C = 24
Slope = 0.56
Area = 150
A/ML = 6.3

The product is evidently branched and absolutely elastic.

### Comparative example 1b (Ref. FC02):

An applicative blend for the field of medium voltage cable insulation was prepared according to a consolidated method, using a closed laboratory mixer of the Bambury type.

According to consolidated practice, the product of comparative example 1a (100 parts) was fed first and left to plasticize for 1 minute with rotors at 45 rpm.

The other components of the blend were then fed, i.e.
- 50 parts of Whitetex (calcined kaolin)
- 8 parts of solid paraffinic wax,
- 1 part of Dynasol A172 (vinyl tris(betamethoxyethoxy) silane),
- 5 parts of Zinc oxide,
- 1.5 parts of phenolic antioxidant Anox HB
- 0.5 parts of stearic acid.

The outer chamber of the mixer was thermostat-regulated at 80°C, the filling factor fixed at 0.75 and the total mixing time 5 minutes.

A part of the blend was processed in an open mixer obtaining a sheet from which a test sample was taken for determining the Mooney viscosity and also, by compression press moulding, a plate on which test samples for tensile tests were taken.
ML (1+4) at 100°C = 24
Slope = 0.579
Area = 134
A/ML = 5.6

### Comparative example 2

An applicative blend for the field of medium voltage cable insulation was prepared according to the consolidated method described in comparative example 1b, using as polymeric base an EP(D)M which can be used in the field i.e. Dutral Ter 4033.

The same procedure and formulation as comparative example 1b was followed, substituting the product of example 1A, with Dutral Ter 4033.
ML (1+4) at 100°C = 28
Slope = 1.137
Area = 23
A/ML = 0.8

### Example 3 (ref. 33/FC04)

The following polymeric base was fed to a twin-screw extruder of the Maris TM 35V type, L/D = 32, maximum temperature 205°C, RPM = 220:
- 85 phr C0038
- 15 phr Clearflex MQF0,
- 1 phr TBHP (at 70% in water),
- 0.30 phr TMPTMA
- 50 phr of Whitetex (calcined kaolin),
- 1 phr of dynasol A172 (vinyl silane).

The product was recovered and subsequently homogenized in an open mixer at 100°C.

The missing ingredients for reaching the exact formulation of examples 1b and 2 in the exact composition were added to a part of the material in an open mixer at 80°C.

The test sample was taken from the sheet thus obtained, for determining the Mooney viscosity and also, by compression press moulding, a plate on which test samples for tensile tests were taken.
ML (1+4) at 100°C = 29
Slope = 0.612
Area = 138
A/ML = 4.8

The product is evidently branched and absolutely elastic.

In spite of the presence of products of the vinyl type as coupling agent (vinyl silane) and the presence of the mineral filler, the product of example 3 effected according to the invention shows rheological characteristics completely similar to those of comparative example 1 (a+b), obtained however through an extra unitary operation.

The following table indicates the data relating to the ML relaxation and tensile tests effected on the non-vulcanized blends of examples 1c, 2c and 3.

| | Comparative ex. 1b | Comparative ex. 2 | Example 3 |
|---|---|---|---|
| ML (1+4) at 100°C | 24 | 28 | 29 |
| Slope | 0.579 | 1.137 | 0.621 |
| Area | 138 | 23 | 138 |
| Area/M L | 5.6 | 0.8 | 4.8 |
| M100 (Pa*s) | 1.51 | 1.40 | 2.13 |
| M200 (Pa*s) | 1.41 | 1.49 | 2.16 |
| CR (Pa*s) | 1.34 | 7.00 | 2.14 |
| Ultimate elong. (%) | 245 | 850 | 386 |

The rheological differences are therefore confirmed (compare comparative examples 1b and 2), that can be deduced on the basis of Italian patent applications MI2003A 000629 and MI2003A 000751, which, with substantially the same ML viscosity, have elasticity values which are absolutely advantageous for the product of comparative example 1.

These same advantages however are also maintained in the example of the invention in spite of the significant simplification (and consequent saving) of the process.

Although the process simplification is an important aspect of the present invention, it does not form the only advantage of operating according to the method of the present invention. By comparing the tensile properties of the formulations 1b (comparative) and 3, a substantial difference can in fact be observed. This is surprising, considering that, for the formulation and polymeric bases, the two formulations are absolutely identical and superimposable. Furthermore they do not significantly differ in viscosity and rheology, certainly not enough to justify such a marked difference in the tensile modulus and ultimate tensile stress. This indicates an improved compatibilization with the mineral fillers.

## Claims

1. A process for the single-step preparation of masters based on EP(D)M and reinforcing inorganic fillers, the above process being **characterized in that** it is effected by mixing, under high shear conditions, a polymeric blend comprising:
a) one or more EP(D)M polymers, optionally mixed with poly-α-olefins;
b) one or more coupling agents;
c) one or more hydroperoxides;
d) reinforcing inorganic fillers;
at a temperature ranging from 75°C to 260°C.

2. The process according to claim 1, wherein the temperature ranges from 140°C to 210°C.

3. The process according to claim 1, wherein the poly-α-olefins are selected from crystalline copolymers of ethylene.

4. The process according to claim 1, wherein the coupling agents are selected from vinyl silanes.

5. The process according to claim 1, wherein the shear value is higher than 100 sec⁻¹.

6. The process according to claim 5, wherein the shear value is higher than 500 sec⁻¹.

7. The process according to claim 1, wherein the hydroperoxide is present in a quantity ranging from 0.05 to 5 parts per 100 parts of polymer (weight/weight).

8. The process according to claim 7, wherein the hydroperoxide is present in a quantity ranging from 0.15 to 2 parts per 100 parts of polymer (weight/weight).

9. The process according to claim 1, wherein the quantity of coupling agent ranges from 0.05 to 5 parts per 100 parts of polymer (weight/weight).

10. The process according to claim 9, wherein the quantity of coupling agent ranges from 0.02 to 2 parts per 100 parts of polymer (weight/weight).

11. The process according to claim 1, wherein the reinforcing fillers are selected from kaolin and silica and related mixtures.

12. The process according to claim 1, wherein the reinforcing mineral filler ranges from 15 to 350 parts per 100 parts of polymer.

13. The process according to claim 12, wherein the reinforcing mineral filler ranges from 30 to 150 parts per 100 parts of polymer.

14. The process according to claim 1, **characterized in that** it is carried out in an extruder in continuous.

15. The process according to claim 14, **characterized in that** it is carried out in a twin-screw extruder or an extruder of the ko-kneter type.

16. The process according to claim 1, **characterized in that** it is carried out in the presence of a polyfunctional vinyl monomer.

17. The process according to claim 16, **characterized in that** the polyfunctional vinyl monomer is selected from acrylic, methacrylic or maleic esters or imides of alcohols or bi-or tri-functional amines.

18. The process according to claim 16, **characterized in that** the polyfunctional vinyl monomer is used in a quantity ranging from 0.5 to 1.5 parts per 100 parts of polymer.
